# EUROPEAN PATENT SPECIFICATION

(11) **EP 0 568 530 B1**
(45) Date of publication and mention of the grant of the patent: **15.01.1997**
(21) Application number: 91909551.3
(22) Date of filing: 17.05.1991
(51) Int. Cl.: A23L 1/105, A23L 1/308

(54) **FOOD PRODUCT CONTAINING DIETARY FIBER AND METHOD OF MAKING SAID PRODUCT**
DIÄTFASERN ENTHALTENDES NÄHRUNGSPRODUKT UND VERFAHREN ZUR HERSTELLUNG DESSELBEN
PRODUIT ALIMENTAIRE CONTENANT DES FIBRES DIETETIQUES ET PROCEDE DE FABRICATION DUDIT PRODUIT

(30) Priority: 18.05.1990 FI 902464
(43) Date of publication of application: 10.11.1993
(73) Proprietor: SALOVAARA, Hannu, SF-00780 Helsinki (FI); KURKA, Anne-Marie, SF-01350 Vantaa (FI)
(72) Inventor: SALOVAARA, Hannu, SF-00780 Helsinki (FI); KURKA, Anne-Marie, SF-01350 Vantaa (FI)
(74) Representative: Wright, Simon Mark
(86) International application number: FI9100157
(87) International publication number: WO9117672

(56) References cited:
- EP-A- 0 228 074
- EP-A- 0 258 486
- WO-A-89/08405
- DE-A- 3 905 055
- DE-B- 2 004 406
- DE-C- 3 706 303
- GB-A- 2 225 922

## Description

### Technical field

The invention relates to a food product prepared by fermentation, based substantially on oat bran, containing living microorganisms, and being nutritionally beneficial, beneficial to health, and tasty. The invention also relates to a food biotechnological method of making easy-to-use fiber-rich food products having a pleasant taste. By the method, food products having a high dietary fiber content and being tasty, non-perishable, and nutritionally valuable may be prepared by controlled fermentation by means of microorganisms having useful properties in view of the technology, health, or the quality of the product.

In accordance with the present invention there is provided a ready to eat food product comprising live lactic acid bacteria prepared by a process which comprises the steps of providing oat bran combining the oat bran with water, heating the mixture of oat bran and water so as to gelatinise starch present in the oat bran, cooling it and then fermenting it with live lactic acid bacteria (i.e. lactobacilli, bifidobacteria or other live lactic acid bacteria).

The present invention also includes a method of making such a product comprising the steps of providing oat bran, combining it with water, heating the oat bran and water so as to gelatinise starch present in the oat bran, cooling it and then fermenting it using lactic acid bacteria (i.e. lactobacilli, bifidobacteria or other lactic acid bacteria). The palatability of instance oat bran, may be improved by the method of the invention. Furthermore, by the method of the invention microorganisms stabilizing the functioning of the intestines may be introduced into a food product, the possibilities of functioning of said microorganisms being improved in accordance with the invention as the dietary fiber components protect them when they are passed in the digestive system.

### State of the art

### a) Dietary fiber

The significance of dietary fiber as a part of a healthy diet has been firmly substantiated by means of clinical and epidemiological studies in the course of the last few years. Particularly the health-promoting effects of oats have been discussed, but recently similar effects have been shown in other grain-derived and vegetable-derived fibers. Cereal bran - specifically oat bran - is rich in physiologically functional soluble fiber (such as beta-glucan) which has been shown to contribute to a decrease in the cholesterol level at least in individuals having a high serum cholesterol level (cf. Wood et al. 1989 and the references presented therein). The effect is considered to be based on the special ability of soluble fiber to bind bile acids through which the disadvantageous LDL cholesterol disappears from the blood. Food containing dietary fiber may also prevent cancer, such as colon cancer and breast cancer (National Cancer Institute 1986; Adlercreutz 1990). Dietary fiber in general improves the functioning of the digestive system in many ways.

Cereal bran is conventionally used for instance in bread, muesli and porridge and together with other foods, such as yoghurt or buttermilk. However, the problem lies in that despite the different ways of addition, dietary fiber, particularly soluble dietary fiber, is often obtained in amounts smaller than called for by the dietetic recommendations, and normally only a fraction of the quantity which has been shown to have for instance cholesterol-lowering effects. Thus it can be stated that the market still lacks grain products containing dietary fiber, such as oat products, which are significant in view of nutritional targets.

### b) Useful microbes

Many useful species of microbes having effects of reducing the growth of disadvantageous and pathogenic organisms live naturally in the gastrointestinal tract of man (and animals). The best known of these include lactobacillus organisms, such as Lactobacillus acidophilus which is industrially used in acidophilus sour milk products and in the preparation of pharmaceutical lyophilized products for elimination of disturbances in the microbial flora of the intestines subsequent to illnesses or for instance use of antibiotics (Kandler & Weiss 1986). In addition to certain Lactobacillus strains, also other lactic acid bacteria, such as streptococci and bifidobacteria and propionic acid bacteria, and certain other bacterial strains, are presumed to possess useful effects.

There are also indications of the fact that certain fermented products containing live lactic acid bacteria may have a beneficial effect on the serum cholesterol level and on the prevention of the genesis of colon cancer (Hepner et al. 1972, Goldin & Gorbach 1984).

It is typical of microbes useful for the digestive system that they can survive in the gastrointestinal tract and can check the other bacterial flora living in the intestines and the intestinal fermentation by means of their metabolic products.

It has now been found that some components of fermented food, such as dietary fiber remaining intact in the gastrointestinal tract, may protect microbes useful for the digestive system as they pass through the digestive tract. The ability of certain useful microbes to attach to surfaces is utilized herein, as they pass through the digestive tract. The protecting effect of dietary fiber may also broaden the spectrum of organisms having useful effects.

### c) Fermented grain products containing living microbes

Foods containing live lactic acid bacteria are known, whereof specifically sour milk products and vegetable products prepared by souring, such as sauerkraut, certain pickles and certain delicacy cucumbers, may be mentioned. On the other hand, the lactic acid bacteria used in the preparation of sour bread are destroyed when the bread is baked.

Grain products inoculated with certain organisms and containing said organisms as living microbes are not known to exist anywhere in the market, if home-brew or small beer containing lactobacilli as Contaminants in addition to yeast is not taken into account. It is true that grain-based foods containing live lactobacilli are known in the food tradition and internationally. Among the traditional foods of Ladogan Karelia, for instance *kauramämmi* (fermented uncooked and unbaked oat pudding) soured with sourdough is mentioned (Lampinen 1970). With fermentation one aimed in particular at improving the taste.

The majority of the traditional soured cereal gruels were cooked after fermentation, and thus the possible useful sporogenous microbes were killed. This happened for instance in the preparation of *kiesu* flummery of Ladogan Karelia, in which sourdough was used as a starter (Talve 1961, Lampinen 1970). The same applies to the millet, corn, cassava, and other porridges and gruels which are still part of staple food in some other parts of the world, for instance Africa, and wherein no starter but spontaneous fermentation is used (for instance *ogi*, *koko*, *kenkey*, *uji*) (Odunfa 1985). However, a starter containing specific lactic acid bacteria is used in the modern preparation of the sour *mahewu* corn beverage powder favored by the Bantus of South Africa (Hesseltine 1979). Yet it is not known that one would have attempted to sour specifically cereal bran to improve its palatability and the hygienic properties of the product.

### Evaluation of the prior art and its disadvantages

The present-day selection of food products lacks easy-to-use, tasty products containing dietary fiber. Ingestion of fiber products, such as oat bran, in a physiologically significant amount is often difficult and requires adding oat bran to other foods whereto it is not necessarily suited for its taste or other properties. Furthermore, also in that event the fiber has the beneficial effects of fiber only, since mere fiber does not have potential microorganisms useful for the digestive system.

Specific bacteria useful to digestion have long been commercially available in freeze-dried form. The problem with these products, however, is that obviously the majority of the bacteria are killed in the course of the commercial storage and distribution line, and at the latest in the stomach prior to the intestines. On the other hand, sour milk products containing fresh microorganisms useful for the digestive system are poorly or not at all suited to milk allergic persons or individuals suffering from lactose intolerance.

### Characteristics of the invention

The method of the invention provides a possibility of preparing, from oat bran and water, tasty products which are rich in (soluble) dietary fiber and which may have a very low energy value. The product may be prepared and seasoned into an easily ingestible yoghurt-type snackfood. No animal fat or milk solids are necessary in the preparation, wherefore the product is suitable to persons avoiding fat and milk products.

In addition to the fact that the oat bran has been brought into a tasty form in accordance with this invention, the fibrous material which is undecomposable in the digestive system serves as a protector and vehicle for the bacteria. useful to health in the digestive tract, and hence improves the beneficial effect of these microbes on the digestive system.

### Advantages of the invention over the prior art

The most important contribution of the invention is bringing oat bran into a tasty, easy-to-use form. Furthermore, the invention combines two health-promoting natural elements, oat bran and useful microorganisms, in the same product so that new food products containing dietary fiber as wanted by nutrition experts are obtained.

### Detailed description of the invention

Diagram 1 presents in a simplified way the steps of the preparation method. Oat bran and other polysaccharides are heated together with water and possible other materials so that (1) the starch is gelatinized and (2) those organisms in the ingredients which are contaminating or cause spoiling of foods are killed (pasteurizing/sterilizing effect). The heat treatment will gelatinize the starch and destroy the microbes, 10⁴⁻⁵/g, in the oat bran, yet not necessarily all heat-resistant bacterial spores. If necessary, the gruel may be sterilized for instance by UHT treatment. Pasteurization by cooking may, however, be a sufficient treatment, since the decrease in pH caused by the fermentation and the fermentation products check the growth of possible contaminating or health-hazardous sporogenous bacteria, such as Bacillus cereus. In connection with the heat treatment one may use added enzymes to modify the method or product. The gruel-like product cooled to a suitable temperature is inoculated with a useful microbe or a mixture of such, and the gruel is allowed to ferment under suitable conditions (generally 20 - 50°C) typically 3 h - 3 days depending on the starter organism. Particularly when bifidobacteria or propionic acid bacteria are used, the anaerobic technique may be employed. During the fermentation, the pH of the product will typically fall below the value pH 5, for instance to pH 4, which will protect the product from contamination and from the growth of microorganisms hazardous to health.

Subsequent to fermentation, the product is cooled to refrigerator temperature, possibly seasoned with berries, juices, sugar, salt or other seasonings, and packed. The product is ready to be ingested as such or together with milk, juice, jam, sugar or the like for instance at refrigerator temperature. The product will remain fit to eat in regard to texture and taste and microbiological quality several weeks stored in a refrigerator.

The recipe is for instance as follows: 1 part oat bran and 10 - 30 parts water. In special cases, the quantity of water may be lower, for instance 5 parts (1 part cereal bran). 20 minutes has been found to be a sufficient heating time for the gruel at 100°C. In this time, the gelatinization can take place and the quantity of contaminating organisms fall very low or to zero. On account of the strong inoculum, for example 0.1 - 5% of a culture having a CFU content per g of more than 10⁵, the pH starts rapidly decreasing, and the possible sporogenous bacteria and re-contaminants which have survived the heat treatment have no possibilities of growing. After the fermentation, the lactic acid content of the product (fresh weight) is characteristically 0.3 -1.0%. During cold storage, the lactic acid content increases. The product has a characteristic taste and odor of the organism/organisms used for the fermentation (for instance yoghurt-like taste and odor when yoghurt bacteria have been used as a starter). The energy value of the product is typically 50 - 150 kcal/100 g and the dietary fiber content 10 - 30 g/100 g (dry matter). The dry matter content of the product is 5 -15%. In special cases, the dry matter content of the product may be as high as 25%. The lactobacillus content of the product is 10⁵⁻⁸ CFU/g*, even as high as 10¹⁰ CFU/g. Table 1 sets forth a depiction of the typical properties of the product. Said values are based on generalizations made on the basis of results of tests carried out by scientific methods.

**Table 1**

| Typical properties of product | |
|---|---|
| Parameter | Value and unit |
| Dry matter content | 5-15% (even as high as 25%) |
| pH | 4-5 (even less than 4) |
| Lactic acid content | 0.3-1.0% (fresh) |
| Energy value | 50-150 kJ/100 g |
| Content of dietary fiber | 10-30 g/100 g (dry matter) |
| Lactobacilli | 10⁵⁻⁸ CFU/g* (even as high as 10¹⁰ CFU) |
| Yeasts/molds | 0 |
| Bacillus cereus | 0 |
| Hemolytic bacteria | 0 |

| | |
|---|---|
| * CFU = colony-forming unit | |

In the following examples, different modification alternatives of the preparation method and the resultant product have been described, under variation of the microorganisms used for fermentation, the process conditions, and ingredients. Diagram 1 presents in a simplified way the steps of the preparation method, and the above-stated Table 1 describes the typical properties of the corresponding product. Certain variations have also been described in Table 2.

### Example 1

One part oat bran and 20 parts water were thoroughly mixed. The mixture was heated to a temperature of 100°C under slow stirring for 20 minutes, whereby a pudding-like soft gruel was formed. The purpose of the heating was on the one hand to gelatinize the starch in the oat bran to attain an appropriate texture, and on the other hand to destroy contaminating microorganisms.

The gruel was cooled to a temperature of 37-45°C, whereby its viscosity increased. The gruel was inoculated with a starter containing Streptococcus thermophilus and Lactobacillus bulgaricus lactic acid bacteria and fermented within the said temperature range for more than 3 hours, whereby the pH fell below the value 4.5.

Depending on the quantity of the inoculum, there were at least 10⁴⁻⁵/g of lactic acid bacteria at the start of the fermentation and at least 10⁸⁻¹⁰/g at the end of the fermentation. Subsequent to fermentation, the gruel was cooled to a temperature of about 6°C and packaged in amounts of 0.1 - 1 liters in plastic or glass containers. The packages were stored at refrigerator temperature (about +6°C).

Depending on the mixture ratios and mixing method, the prepared product had a consistency of the yoghurt, *viili* (clabbered milk), or jelly type and of a food product suitable for eating with a spoon or for drinking. The advantage of specifically oat bran in comparison with for instance oat flour was the pleasant texture which "snapped off" when spooned, which was due to the bran particles. The taste and odor were fresh and sour. A taste and odor resembling yoghurt could easily be detected. The color of the product was light, grayish, and depended on the properties of the oat bran used, such as the colour, starch, fiber, and hull content.

The pH of the product was 3.5-4.5, depending on the fermentation and storage method. The lactic acid content was for example about 0.4-0-5%, the dry matter content about 4-5 g/100 g and the dietary fiber content 0.6-1.0 g/100 g depending on the composition of the oat bran. The dietary fiber content per energy unit could be as high as 1.0-1.5 g/100 kJ.

In the microbiological sense and as evaluated in sensory tests, the product remained palatable several weeks at refrigerator temperature. The product characteristically contained at least 10⁵⁻⁸ CFU/g of live lactic acid bacteria. No wheying-off took place even in long-term storage when a suitable raw material and mixture ratio were used.

In vitro tests gave indication of the fact that the probiotic lactobacilli adhere to the bran particles and that the bran particles may protect the adhesive lactic acid bacteria in the gastrointestinal tract.

### Example 2

The procedure of Example 1 was followed, but using a Lactobacillus casei (Lactobacillus GG) lactic acid bacterium or a product containing it (Gefilus^{R}) as a starter; the fermentation temperature was 35°C. The quantity of live bacteria in the product was at least 10⁵⁻⁸ CFU/g depending on the storage time and temperature. The pH of the product was 3.5-4.5 and the taste was fresh and sour. The shelf life in a refrigerator was at least 2 weeks.

The in vitro tests indicated that said lactobacillus adheres to the bran particles and that the bran particles can be presumed to improve the therapeutic properties of this lactobacillus in the intestines.

### Example 3

Liquid fluid, jelly-like, or porridge-like half-solid products were prepared of oat bran using the microorganisms listed in Table 2 for the fermentation and following the methods disclosed in Examples 1 and 2. Fermentation times and temperatures optimal to each starter were applied in the fermentation. The pH of the product was typically 3.5-4.5 and the taste was sour.

### Example 4

Bifidobacteria or propionic acid bacteria are used for the fermentation, possibly in combination with the use of lactic acid bacteria. The fermentation of the different bacterial species may be carried out separately before the combination of the ingredients.

### Example 5

Regardless of the alternatives of the preparation method (Examples 1-4), one uses in combination with oat bran other ingredients containing dietary fiber or mixtures of such, possibly in combination with other food ingredients and additives. Ingredients containing dietary fiber may be for instance oat, wheat, or barley flour, rolled oats, oat fiber product, barley fiber product, other cereal bran fraction, *talkkunajauho* (cooked, dried oatmeal powder), or other material containing vegetable fiber.

The taste, odor, color, texture and other sensory qualities and the nutritive value of the product may be greatly modified and improved by using as ingredients, besides the bran-containing raw material, milk, milk powder or other milk-derived product, soya flour, a protein product, starch, sugar, honey, berries, fruit, vegetables, or jams, juices, or concentrates made of these, coffee, cocoa, etc., or food additives (salt, aromatic and coloring substances, stabilizing and thickening agents, etc.).

The nutritional value of the product may further be modified by using as ingredients leguminous plants or animal-derived products, or food ingredients produced of these.

The ingredients modifying the taste, nutritional value, and other properties may be added either prior to cooking, prior to fermentation, in connection with packaging into portions, or as late as on the serving occasion, for instance depending on whether industrial or catering-type production of ready-made food products is concerned.

### Example 6

A product prepared following the principles of Examples 1 - 5 may be used as an ingredient of other foods, such as milk, meat, vegetable, and cereal products, in which case the fermented fiber-containing product has an effect on the taste and nutritional value or other properties or also on the therapeutic properties of the product, depending on the application and the product.

### Example 7

The product may be prepared in accordance with the examples disclosed above, freeze-dried, and used as mixed in water, milk, juice, etc.

| Diagram 1. Flow chart of the different steps of the preparation method |
|---|
| Oats |
| Milling (dry or wet grinding) |
| Oat bran |
| Mixing with water |
| Heat treatment (gelatinization of starch & pasteurization/sterilization) |
| Cooling to fermentation temperature |
| Inoculation with microbial starter |
| Fermentation |
| Possible seasoning with fruit, |
| berries and/or sugar |
| Cooling to refrigerator temperature |
| Packaging/storage/delivery in cold line |
| Cold-eaten product (easy-to-use snack or dessert, or may be used for the preparation of other food products) |

**Table 2**

| Examples of starters suitable for the fermentation of gruel cooked from cereal bran, of the fermentation conditions, and products | | | | | |
|---|---|---|---|---|---|
| Starter organism | Ferment. temp. | Ferment. time | Final pH | Shelf life at +5 C | Typical taste |
| L. bulgaricus/S. thermophilus (yoghurt) | 35-45 C | 3-5h | c. 4.3 | > 2 weeks | yoghurt like |
| Lactobacillus casei (GG) | 37-42 C | 12-24 h | c. 4.3 | > 2 weeks | sour |
| L. acidophilus/L. bulgaricus/S. thermophilus (Acidophilus yoghurt) | 35-45 C | 3-5 h | c. 4.3 | > 2 weeks | sour |
| Lactobacillus sp. (collected strains) | 35-40 C | 12 h | c. 4.3 | > 2 weeks | sour |
| S. lactis/S. cremoris/S. diacetylactis/Leucon. cremoris (buttermilk) | 20-35 C | 12-24 h | c. 4.3 | > 2 weeks | sour |
| L. kefir/S. lactis/S. cremoris/L. brevis/Leuconostoc sp./Torulopsis sp. (kefir) | 20-35 C | 12-24 h | c. 4.3 | > 2 weeks | sour |
| S. lactis/S. cremoris/S. diacetylactis/L. cremoris/P. acidilactici (clabbered milk) | 20 C | 12-24 h | c. 4.3 | > 2 weeks | sour |
| Sourdough starter (lactobac. & yeast) | 25-30 C | 12-24 h | c. 4.3 | > 1 week | sour |
| * at the end of fermentation | | | | | |

## Claims

1. A ready to eat food product comprising live lactic acid bacteria prepared by a process which comprises the steps of providing oat bran combining the oat bran with water, heating the mixture of oat bran and water so as to gelatinise starch present in the oat bran, cooling it and then fermenting it with live lactic acid bacteria (i.e. lactobacilli, bifidobacteria or other live lactic acid bacteria).

2. A food product according to claim 1 comprising at least 10⁵ CFU of live lactic acid bacteria/g.

3. A food product according to claim 1 or claim 2 comprising 10⁵-10⁸ live lactic acid bacteria/g.

4. A food product according to claim 1 comprising at least 10⁸ live lactic acid bacteria/g.

5. A food product according to claim 4 comprising 10⁸-10¹⁰ live lactic acid bacteria/g.

6. A food product according to any preceding claim which is prepared by a process including a pasteurisation or a sterilization step.

7. A food product according to any preceding claim having a pH of pH5 or below (e.g. below pH4).

8. A food product according to any preceding claim having a lactic acid content of 0.3 to 1.0%.

9. A food product according to any preceding claim wherein the oat bran is mixed with water prior to heating and fermentation at a ratio of from one part of oat bran:five parts of water to one part of oat bran:thirty parts of water.

10. A food product according to any preceding claim comprising (in fermented or non-fermented form): berries, juices, salt, milk, milk powder or another milk derived product, jam, sugar, soya flour, concentrates thereof, coffee, cocoa, food additives, colourants, stabilizers, thickeners, meat, vegetable or cereal products, or combinations of any of the aforesaid.

11. A food product according to any preceding claim in fluid form or in semi-solid form.

12. A food product according to any preceding claim in packaged form.

13. A food product according to any preceding claim when refrigerated.

14. A food product according to any preceding claim comprising Lactobacilli.

15. A food product according to claim 14 wherein the Lactobacilli comprise *L. casei*, *L. acidophilus*, *L. bulgarias*, *L. themophilis* or a combination thereof.

16. A food product according to claim 14 or claim 15 which has a pH of from 3,5 to 5 and which also has the following characteristics:
| | |
|---|---|
| Dry matter content | 5-25% |
| Lactic acid content | 0.3-1.0% (fresh) |
| Energy value | 50-150kJ/100g |
| Dietary fibre content | 10-30 g/100g (d.m.) |
| Lactobacilli | 10⁵⁻¹⁰ CFU/g |

17. A food product according to claim 14 or claim 15 which has a pH of from 3,5 to 5 and which also has the following characteristics:
| | |
|---|---|
| Dry matter content | 5-15% |
| Lactic acid content | 0.3-1.0% (fresh) |
| Energy value | 50-150kJ/100g |
| Dietary fibre content | 10-30 g/100g (d.m.) |
| Lactobacilli | 10⁵⁻⁸ CFU/g |

18. A food product according to any preceding claim for use in aiding digestion or in reducing cholesterol levels.

19. A method of preparing a food product according to any preceding claim, comprising providing oat bran, combining it with water, heating the oat bran and water so as to gelatinise starch present in the oat bran, cooling it and then fermenting it using lactic acid bacteria (i.e. lactobacilli, bifidobacteria or other lactic acid bacteria).

20. A method according to claim 19 wherein the oat bran is combined with water prior to heating at a ratio of from one part oat bran:five parts water to one part oat bran:thirty parts water.

21. A method according to claim 19 or claim 20 wherein a pasteurization or a sterilization step is provided.

22. A method according to any of claims 19 to 21 wherein the lactic acid bacteria used to ferment the oat bran after heating thereof are added to the oat bran at a level of at least 10⁴⁻⁵ CFU/g.

## Patentansprüche

1. Essfertiges Nahrungsmittel, welches lebende Milchsäurebakterien enthält, die durch ein Verfahren erzeugt werden, das die Schritte umfaßt, Haferkleie bereitzustellen, die Haferkleie mit Wasser zu vermischen, die Mischung aus Haferkleie und Wasser zu erhitzen um so die in der Haferkleie enthaltene Stärke zu gelatinieren, dies abzukühlen und dann mit lebenden Milchsäurebakterien (d.h. Lactobacilli, Bifidobakterien oder andere Milchsäurebakterien) zu fermentieren.

2. Nahrungsmittel nach Anspruch 1, welches wenigstens 10⁵ CFU lebende Milchsäurebakterien/g enthält.

3. Nahrungsmittel nach Anspruch 1 oder 2, welches 10⁵ - 10⁸ lebende Milchsäurebakterien/g enthält.

4. Nahrungsmittel nach Anspruch 1, welches wenigstens 10⁸ lebende Milchsäurebakterien/g enthält.

5. Nahrungsmittel nach Anspruch 4, welches 10⁸ - 10¹⁰ lebende Milchsäurebakterien/g enthält.

6. Nahrungsmittel nach einem der vorhergehenden Ansprüche, welches durch ein Verfahren hergestellt ist, das einen Pasteurisations- oder einen Sterilisationsschritt einschließt.

7. Nahrungsmittel nach einem der vorhergehenden Ansprüche, welches einen pH-Wert von pH 5 oder darunter (z.B. unter pH 4) aufweist.

8. Nahrungsmittel nach einem der vorhergehenden Ansprüche, welches einen Milchsäuregehalt von 0,3 bis 1,0% aufweist.

9. Nahrungsmittel nach einem der vorhergehenden Ansprüche, bei welchem die Haferkleie mit Wasser vor dem Erhitzen und der Fermentation in einem Verhältnis von einem Teil Haferkleie zu fünf Teilen Wasser bis zu einem Verhältnis von einem Teil Haferkleie zu dreißig Teile Wasser gemischt ist.

10. Nahrungsmittel nach einem der vorhergehenden Ansprüche welches (in fermentierter oder nichtfermentierter Form) folgendes enthält: Beeren, Fruchtsäfte, Salz, Milch, Milchpulver oder ein anderes von Milch abgeleitetes Produkt, Marmelade, Zucker, Sojamehl, Konzentrate daraus, Kaffee, Kakao, Nahrungsmittelzusätze, Farbstoffe, Stabilisatoren, Verdickungsmittel, Fleisch, Gemüse oder Getreideprodukte oder Kombinationen von jedem der vorgenannten Stoffe.

11. Nahrungsmittel nach einem der vorhergehenden Ansprüche, welches in flüssiger oder halbfester Form vorliegt.

12. Nahrungsmittel nach einem der vorhergehenden Ansprüche, welches in verpackter Form vorliegt.

13. Nahrungsmittel nach einem der vorhergehenden Ansprüche, welches in gekühltem Zustand vorliegt.

14. Nahrungsmittel nach einem der vorhergehenden Ansprüche, welches Lactobaciilen enthält.

15. Nahrungsmittel nach Anspruch 14, bei weichem die Lactobacillen *L. casei, L. acidophilus, L. bulgarias, L. thermophili* oder eine Kombination daraus umfassen.

16. Nahrungsmittel nach Anspruch 14 oder 15, welches einen pH-Wert von von 3,5 bis 5 und die folgenden Charakteristika aufweist:
| | |
|---|---|
| Trockensubstanzgehalt: | 5 - 25 % |
| Milchsäuregehalt | 0,3 - 1,0% (frisch) |
| Energiewert | 50 - 150 kJ/100g |
| Diätfasergehalt | 10 - 30 g/100g (TRS) |
| Lactobacillen | 10⁵⁻¹⁰ CFU/g. |

17. Nahrungsmittel nach Anspruch 14 oder 15, welches einen pH-Wert von von 3,5 bis 5 und die folgenden Charakteristika aufweist:
| | |
|---|---|
| Trockensubstanzgehalt: | 5 - 15% |
| Milchsäuregehalt | 0,3 - 1,0% (frisch) |
| Energiewert | 50 - 150 kJ/100g |
| Diätfasergehalt | 10 - 30 g/100g (TRS) |
| Lactobacillen | 10⁵⁻⁸ CFU/g. |

18. Nahrungsmittel nach einem der vorhergehenden Ansprüche zur Verwendung als Verdauungshilfe oder zur Absenkung des Cholesterinspiegels.

19. Verfahren zur Herstellung eines Nahrungsmittels nach einem der vorhergehenden Ansprüche, bei welchem Haferkleie bereitgestellt, mit Wasser vermischt, Haferkleie und Wasser erhitzt um so die in der Haferkleie enthaltene Stärke zu gelatinieren, dies abgekühlt und dann unter Verwendung von Milchsäurebakterien (d.h. Lactobacilli, Bifidobakterien oder andere Milchsäurebakterien) fermentiert wird.

20. Verfahren nach Anspruch 19, bei welchem die Haferkleie mit Wasser vor dem Erhitzen in einem Verhältnis von einem Teil Haferkleie zu fünf Teilen Wasser bis zu einem Verhältnis von einem Teil Haferkleie zu dreißig Teilen Wasser gemischt wird.

21. Verfahren nach Anspruch 19 oder 20, bei welchem ein Pasteurisations- oder ein Sterilisationsschritt durchgeführt wird.

22. Verfahren nach einem der Ansprüche 19 bis 21, bei welchem die zur Fermentierung der Haferkleie nach deren Erhitzung verwendeten Milchsäurebakterien der Haferkleie in einer Menge von wenigstens 10⁴⁻⁵ CFU/g. zugesetzt werden.

## Revendications

1. Produit alimentaire prêt à manger, comprenant des bactéries lactiques vivantes, préparé par un procédé qui comprend les étapes de disposition de son d'avoine, combinaison du son d'avoine avec de l'eau, chauffage du mélange de son d'avoine et d'eau de manière à gélifier l'amidon présent dans le son d'avoine, refroidissement de celui-ci et ensuite, fermentation de celui-ci avec des bactéries lactiques vivantes (à savoir, lactobacilli, bifidobacteria ou d'autres bactéries lactiques vivantes).

2. Produit alimentaire suivant la revendication 1, comprenant au moins 10⁵ CFU de bactéries lactiques vivantes/g.

3. Produit alimentaire suivant la revendication 1 ou 2, comprenant au moins 10⁵-10⁸ bactéries lactiques vivantes/g.

4. Produit alimentaire suivant la revendication 1, comprenant au moins 10⁸ bactéries lactiques vivantes/g.

5. Produit alimentaire suivant la revendication 4, comprenant 10⁸-10¹⁰ bactéries lactiques vivantes/g.

6. Produit alimentaire suivant l'une quelconque des revendications précédentes, qui est préparé par un procédé comprenant une étape de pasteurisation ou de stérilisation.

7. Produit alimentaire suivant l'une quelconque des revendications précédentes, ayant un pH de 5 ou inférieur (par exemple, inférieur à pH 4).

8. Produit alimentaire suivant l'une quelconque des revendications précédentes, ayant une teneur en acide lactique de 0,3 à 1,0%.

9. Produit alimentaire suivant l'une quelconque des revendications précédentes, dans lequel le son d'avoine est mélangé à l'eau avant le chauffage et la fermentation, dans un rapport de une partie de son d'avoine:cinq parties d'eau à une partie de son d'avoine:trente parties d'eau.

10. Produit alimentaire suivant l'une quelconque des revendications précédentes, comprenant (sous forme fermentée ou non fermentée) : baies, jus, sel, lait, poudre de lait ou autre produit dérivé du lait, confiture, sucre, farine de soya, concentrés de celle-ci, café, cacao, additifs alimentaires, colorants, stabilisants, épaississants, viande, produits végétaux ou céréaliers, ou des combinaisons de n'importe lesquels de ceux-ci.

11. Produit alimentaire suivant l'une quelconque des revendications précédentes, sous forme fluide ou semi-solide.

12. Produit alimentaire suivant l'une quelconque des revendications précédentes, sous forme emballée.

13. Produit alimentaire suivant l'une quelconque des revendications précédentes, sous forme réfrigérée.

14. Produit alimentaire suivant l'une quelconque des revendications précédentes, comprenant des Lactobacilli.

15. Produit alimentaire suivant la revendication 14, ou les Lactobacilli comprennent L. casei, L. acidophilus, L. bulgarias, L. thermophilis ou une combinaison de ceux-ci.

16. Produit alimentaire suivant la revendication 14 ou 15, qui a un pH de 3,5 à 5, et qui a également les caractéristiques suivantes :
| | |
|---|---|
| Teneur en matière sèche | 5-25% |
| Teneur en acide lactique | 0,3-1,0% (frais) |
| Valeur énergétique | 50-150 kJ/100 g |
| Teneur en fibres diététiques | 10-30 g/100 g (d.m.) |
| Lactobacilli | 10⁵⁻¹⁰ CFU/g |

17. Produit alimentaire suivant la revendication 14 ou 15, qui a un pH de 3,5 à 5, et qui a également les caractéristiques suivantes :
| | |
|---|---|
| Teneur en matière sèche | 5-15% |
| Teneur en acide lactique | 0,3-1,0% (frais) |
| Valeur énergétique | 50-150 kJ/100 g |
| Teneur en fibres diététiques | 10-30 g/100 g (d.m.) |
| Lactobacilli | 10⁵⁻⁸ CFU/g |

18. Produit alimentaire suivant l'une quelconque des revendications précédentes, destiné à aider la digestion ou à réduire les taux de cholestérol.

19. Procédé de préparation d'un produit alimentaire suivant l'une quelconque des revendications précédentes, comprenant la disposition de son d'avoine, la combinaison du son d'avoine avec de l'eau, le chauffage du son d'avoine et de l'eau de manière à gélifier l'amidon présent dans le son d'avoine, le refroidissement de celui-ci et ensuite, la fermentation de celui-ci avec des bactéries lactiques vivantes (à savoir, lactobacilli, bifidobacteria ou d'autres bactéries lactiques vivantes).

20. Procédé suivant la revendication 19, dans lequel le son d'avoine est mélangé à l'eau avant le chauffage, dans un rapport de une partie de son d'avoine:cinq parties d'eau à une partie de son d'avoine:trente parties d'eau.

21. Procédé suivant la revendication 19 ou 20, dans lequel on réalise une étape de pasteurisation ou de stérilisation.

22. Procédé suivant l'une quelconque des revendications 19 à 21, dans lequel les bactéries lactiques utilisées pour fermenter le son d'avoine après chauffage de celui-ci, sont ajoutées au son d'avoine à un taux d'au moins 10⁴⁻⁵ CFU/g.
